# EUROPEAN PATENT APPLICATION

(11) **EP 3 492 733 A1**
(43) Date of publication of application: **05.06.2019**
(21) Application number: 17834008.9
(22) Date of filing: 10.07.2017
(51) Int. Cl.: F03B 15/18, F03B 11/08

(54) **HYDRAULIC POWER GENERATING DEVICE AND POWER GENERATING SYSTEM**

(30) Priority: 28.07.2016 JP 2016148751; 28.04.2017 JP 2017089699
(71) Applicant: NTN Corporation, Osaka-shi, Osaka 550-0003 (JP)
(72) Inventor: FUJITA, Yasuyuki, Iwata-shi Shizuoka 438-8510 (JP); KAWAI, Tomoya, Kuwana-shi Mie 511-0867 (JP)
(74) Representative: Bockhorni & Brüntjen Partnerschaft Patentanwälte mbB
(86) International application number: PCT/JP2017/025156
(87) International publication number: WO 2018/021000

(57) **Abstract**

A control device performs a control process including the steps of: determining whether a predetermined condition has been established (S 100); when it has been determined that the predetermined condition has been established (YES in S100), clearing a counter (S102); performing reverse rotation control (S104); performing forward rotation control (S 106); incrementing the counter (S 108); and determining whether the counter's counted value has reached an upper limit (S 110).

## Description

### TECHNICAL FIELD

The present invention relates to a hydroelectric power generation apparatus and a power generation system, and more particularly to a technique used to remove debris entangled in a small-sized hydroelectric power generation apparatus.

### BACKGROUND ART

A hydroelectric power generation apparatus is a system that uses kinetic energy of running water for power generation. The hydroelectric power generation apparatus mainly includes a hydraulic turbine rotated by receiving a flow of water, a power generator coupled to the hydraulic turbine to convert rotational energy into electrical energy, and a control device which controls an output of the power generator and the hydraulic turbine. Optimum power extracted from the power generator varies with flow velocity, and accordingly, the control device measures flow velocity, the hydraulic turbine's rotational speed, or voltage of power generated by the power generator, determines optimum power to be extracted from the power generator, and controls the power generator so that an amount of power that the power generator generates matches the optimum value.

Garbage, aquatic plants and other similar debris drifting from upstream and arriving at the hydroelectric power generation apparatus get entangled in the hydraulic turbine and cause a reduction in an amount of power that the apparatus generates. For this reason, countermeasures against such debris are important for hydroelectric power generation. For example, it is preferable to install a device upstream of the hydraulic turbine for removing debris.

Japanese Patent Laying-Open No. 2013-189837 (Patent Literature 1) and Japanese Patent Laying-Open No. 2014-202093 (Patent Literature 2) disclose techniques for countermeasures against debris obstructing hydroelectric power generation.

### CITATION LIST

### PATENT LITERATURE

PTL 1: Japanese Patent Laying-Open No.2013-189837
PTL 2: Japanese Patent Laying-Open No. 2014-202093

### SUMMARY OF INVENTION

### TECHNICAL PROBLEM

Japanese Patent Laying-Open No. 2013-189837 (Patent Literature 1) discloses an example of installing debris removal equipment in a water channel upstream of the location of a hydraulic turbine for removing foreign matters. For a small-sized hydroelectric power generation apparatus that can be easily installed in a water channel, however, it is difficult to use such large-scale debris removal equipment because it serves as a factor for increasing a cost. For this reason, it is conceivable to install a simple debris remover such as a comb-shaped filter, for example, in such a hydroelectric power generation apparatus.

Some debris and aquatic plants may flow into the hydraulic turbine of the hydroelectric power generation apparatus equipped with the simple debris remover. Some debris having arrived at the hydraulic turbine passes through the hydraulic turbine, while other debris is caught by the blades (or vanes) of the hydraulic turbine. The debris caught by the blades is pressed against the blades as they traverse running water, and as there is little change in flow velocity, the debris does not come off the blades. A large amount of debris and aquatic plants adhering to the hydraulic turbine causes a drop in an ability to generate power. The simple debris remover thus does not serve as perfect countermeasures against debris, and a periodical operation to remove debris adhering to the hydraulic turbine is required.

On the other hand, Japanese Patent Laying-open No. 2014-202093 (Patent Literature 2) proposes a method of causing a power generator to function as an electric motor, and using a hydraulic turbine blade as a crushing blade for crushing foreign matters to crush and remove debris.

However, when string-like debris is entangled in the hydraulic turbine, even the crushing blade disclosed in Patent Literature 2 may not be able to remove the debris from the hydraulic turbine.

The present invention has been made to solve the above problem, and it contemplates a hydroelectric power generation apparatus and power generation system which can remove string-like debris entangled in a hydraulic turbine thereof.

### SOLUTION TO PROBLEM

According to one aspect of the present invention, a hydroelectric power generation apparatus comprises: a hydraulic turbine configured to rotate in a first direction by receiving a water current; a power generator coupled with the hydraulic turbine; and a control device configured to control the power generator. The control device performs reverse rotation control and forward rotation control. The reverse rotation control causes a torque in a second direction opposite to the first direction to act on the hydraulic turbine to rotate the hydraulic turbine in the second direction. The forward rotation control reverses a direction of rotation of the hydraulic turbine to the first direction.

In this way, even if string-like debris is entangled in the hydraulic turbine, the reverse rotation control and the forward rotation control can be performed to cause the string-like debris to float off the hydraulic turbine and can thus remove the string-like debris entangled in the hydraulic turbine.

Preferably, the power generator is a rotary electric machine. The control device includes a controller and an inverter configured to transmit and receive power to and from the rotary electric machine in response to a control command issued from the controller.

This allows the reverse rotation control and the forward rotation control to be performed by using the inverter. String-like debris entangled in the hydraulic turbine can thus be removed.

Still preferably, the control device is configured to perform the reverse rotation control and the forward rotation control alternately a plurality of times. Times for which the hydraulic turbine is driven in the reverse and forward rotation controls are different from times for which the hydraulic turbine is driven when the reverse and forward rotation controls are immediately previously performed, respectively.

A time to drive the hydraulic turbine can be different whenever the reverse rotation control and the forward rotation control are performed, and string-like debris entangled in the hydraulic turbine can be easily floated off.

Still preferably, the control device is configured to perform the reverse rotation control and the forward rotation control alternately a plurality of times. Torques acting on the hydraulic turbine to drive the hydraulic turbine in the reverse and forward rotation controls are different from torques acting on the hydraulic turbine to drive the hydraulic turbine when the reverse and forward rotation controls are immediately previously performed, respectively.

Torque to drive the hydraulic turbine can be different whenever the reverse rotation control and the forward rotation control are performed, and string-like debris entangled in the hydraulic turbine can be easily floated off.

Still preferably, the control device is configured to perform the reverse rotation control and the forward rotation control alternately a plurality of times. Manners in which the hydraulic turbine is driven in the reverse and forward rotation controls are identical to manners in which the hydraulic turbine is driven when the reverse and forward rotation controls are immediately previously performed, respectively. The manner includes the time for which the hydraulic turbine is driven and the torque acting on the hydraulic turbine to drive the hydraulic turbine.

This allows the reverse rotation control and the forward rotation control to be performed with the same driving time or the same driving torque. String-like debris entangled in the hydraulic turbine can thus be removed.

Still preferably, the control device is configured to perform the reverse rotation control and the forward rotation control when a predetermined condition has been established. The predetermined condition includes at least one of: a condition that the power generator generates an amount of power smaller than a threshold value; a condition that the hydraulic turbine has a rotational speed smaller than a threshold value; a condition that the power generator generates power having a voltage reduced to be smaller than a threshold value; and a condition that a predetermined period of time has elapsed since a time point at which the reverse rotation control and the forward rotation control were last performed.

Thus when a condition with a possibility of string-like debris entangled in the hydraulic turbine is established the reverse rotation control and the forward rotation control are performed and string-like debris entangled in the hydraulic turbine is floated off the hydraulic turbine and thus removed therefrom.

Still preferably, when power generated by the generator has reduced from power corresponding to a flow velocity by an amount having a first value, the control device performs the reverse rotation control and the forward rotation control alternately a first number of times. When power generated by the generator has reduced from the power corresponding to the flow velocity by an amount having a second value larger than the first value, the control device performs the reverse rotation control and the forward rotation control alternately a second number of times larger than the first number of times.

String-like debris can thus be floated off the hydraulic turbine and thus removed therefrom.

Still preferably, when the control device performs at least one of the reverse rotation control and the forward rotation control, the control device controls the power generator to rotate the hydraulic turbine at a rotational speed in accordance with a first control pattern. When recovery of power generated by the hydroelectric power generation apparatus is insufficient, the control device controls the power generator to rotate the hydraulic turbine at a rotational speed in accordance with a second control pattern, a changing rate of the rotation speed of the second control pattern being larger than that of the first control pattern.

This can reduce a load on the power generator, and can also reliably float string-like debris off the hydraulic turbine and thus remove it therefrom when the power that the apparatus generates is insufficiently recovered.

Still preferably, the hydraulic turbine has a horizontal-axis-type, propeller-type rotary blade.

By performing the reverse rotation control and the forward rotation control, string-like debris entangled in the hydraulic turbine having a propeller-type rotary blade can be floated off the hydraulic turbine and thus removed therefrom.

Still preferably, the hydraulic turbine has a vertical-axis-type rotary blade.

By performing the reverse rotation control and the forward rotation control, string-like debris entangled in the hydraulic turbine having a vertical-axis-type rotary blade can be floated off the hydraulic turbine and thus removed therefrom.

Still preferably, a power generation system is configured to perform ocean current power generation or tidal power generation by using the above hydroelectric power generation apparatus The ocean current power generation or tidal power generation converts kinetic energy of running water into electric power.

This allows an amount of power to be generated without reduction due to debris.

### ADVANTAGEOUS EFFECTS OF INVENTION

Thus a hydroelectric power generation apparatus and power generation system can be provided which remove string-like debris entangled in a hydraulic turbine thereof.

### BRIEF DESCRIPTION OF DRAWINGS

Fig. 1 is a front view of a configuration of a hydroelectric power generation apparatus according to an embodiment.
Fig. 2 is a side view of a configuration of the hydroelectric power generation apparatus according to the embodiment.
Fig. 3 is a block diagram showing a configuration of controlling the hydroelectric power generation apparatus according to the embodiment.
Fig. 4 is a flowchart of a process performed by a control device to control the hydroelectric power generation apparatus according to the embodiment.
Fig. 5 is a flowchart of a process performed by the control device to control the hydroelectric power generation apparatus according to the embodiment for reverse rotation.
Fig. 6 is a flowchart of a process performed by the control device to control the hydroelectric power generation apparatus according to the embodiment for forward rotation.
Fig. 7 is a figure for illustrating a state of string-like debris entangled in the hydraulic turbine.
Fig. 8 is a cross section of a blade of the hydraulic turbine with debris adhering thereto.
Fig. 9 is a figure for illustrating a state of string-like debris when the hydraulic turbine is stopped from rotating.
Fig. 10 is a figure for illustrating a state of string-like debris when the hydraulic turbine is rotated in reverse.
Fig. 11 is a front view of a schematic shape of a hydroelectric power generation apparatus according to a modified example.
Fig. 12 is a flowchart of a process performed by a control device to control a hydroelectric power generation apparatus according to a second embodiment.
Fig. 13 is a diagram showing a relationship between power generated before a debris removal control and power generated after the debris removal control.
Fig. 14 is a graph for determining how many times the debris removal control is performed.
Fig. 15 is a diagram showing a relationship between power generated before the debris removal control and how many times the debris removal control is performed.
Fig. 16 is a waveform diagram representing how rotational speed changes when the debris removal control is performed a plurality of times.
Fig. 17 is a flowchart of a process performed by a control device to control a hydroelectric power generation apparatus according to a third embodiment.
Fig. 18 is a waveform diagram showing a first example of a first control pattern.
Fig. 19 is a waveform diagram showing a second example of the first control pattern.
Fig. 20 is a waveform diagram showing a third example of the first control pattern.
Fig. 21 is a waveform diagram showing an example of a second control pattern.

### DESCRIPTION OF EMBODIMENTS

Embodiments of the present invention will now be described with reference to the drawings. In the following drawings, identical or corresponding components are identically denoted and will not be described redundantly.

### [First Embodiment]

### <Configuration of hydroelectric power generation apparatus>

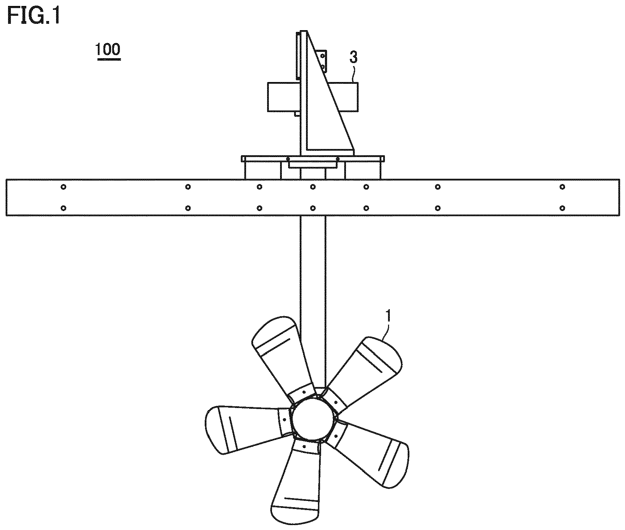

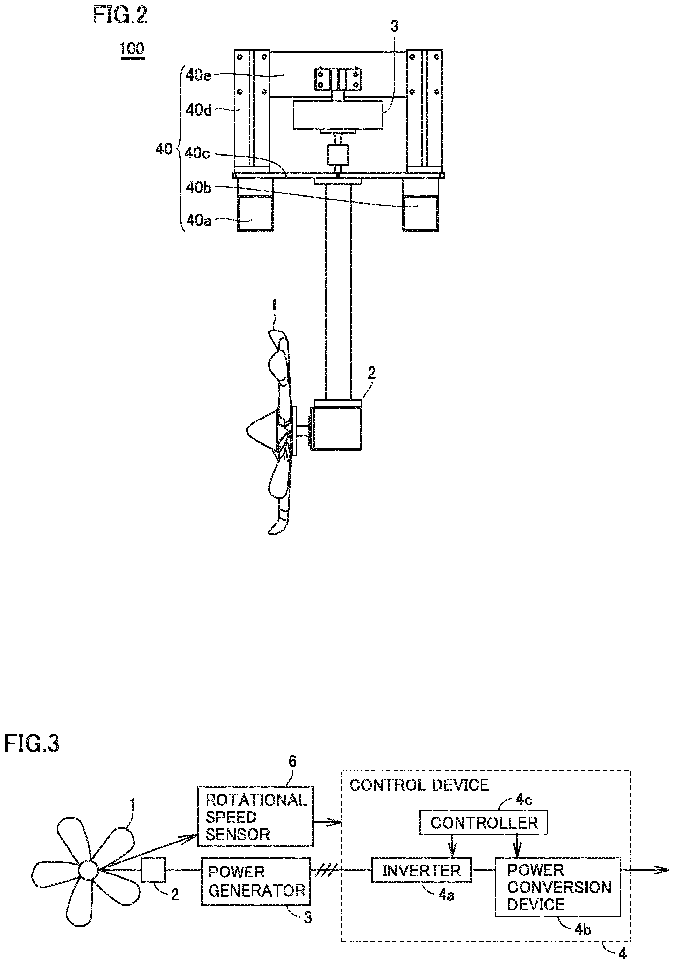

Fig. 1 is a front view of a configuration of a hydroelectric power generation apparatus 100 according to a (first) embodiment. Fig. 2 is a side view of the configuration of hydroelectric power generation apparatus 100 according to the present embodiment.

Hydroelectric power generation apparatus100 shown in Figs. 1 and 2 is a compact and lightweight hydroelectric power generation system installable in an existing water channel for passing agricultural water, city water, industrial water, or the like and utilizing kinetic energy of a water current for power generation.

As shown in Figs. 1 and 2, hydroelectric power generation apparatus 100 comprises a hydraulic turbine 1, a speed increasing gear 2, a power generator 3, and a support unit 40.

Hydraulic turbine 1 has a propeller-type rotary blade rotating about a horizontal shaft. Hydraulic turbine 1 rotates as it receives force of a water current in the water channel.

Speed increasing gear 2 is connected to hydraulic turbine 1. Speed increasing gear 2 increases the rotational speed of hydraulic turbine 1 at a prescribed gear ratio, and also converts the rotation of the horizontal shaft into rotation of a vertical shaft and transmits the rotation to power generator 3.

Power generator 3 is for example a three-phase synchronous power generator. Power generator 3 is coupled to hydraulic turbine 1 via speed increasing gear 2. Power generator 3 includes a rotor and a stator, none of which is shown. Power generator 3 generates AC power as the rotor is rotated by the rotation of hydraulic turbine 1. The power that power generator 3 generates is controlled by a control device 4 (see Fig. 3). In addition, power generator 3 is a rotary electric machine receiving power from an inverter 4a, which will be described hereinafter (see Fig. 3), to be also operable as an electric motor.

Support unit 40 supports hydraulic turbine 1, speed increasing gear 2 and power generator 3. Support unit 40 includes two beams 40a and 40b, a mount 40c, a support 40d, and a base plate 40e.

Two beams 40a and 40b are disposed so as to be positionally parallel to each other. Mount 40c overlies two beams 40a and 40b at their respective centers. Two supports 40d are disposed on mount 40c at one and the other ends, respectively. Base plate 40e is disposed to connect two supports 40d at their upper portions.

Power generator 3 is disposed between mount 40c and base plate 40e and fixed to base plate 40e. On a lower side of mount 40c is provided a support for positionally fixing hydraulic turbine 1 and speed increasing gear 2 with respect to mount 40c. A rotary shaft which connects speed increasing gear 2 and power generator 3 is accommodated inside the support. When two beams 40a and 40b are disposed above the side walls of the water channel along the widthwise direction of the water channel, hydraulic turbine 1 is fixed in the water channel at a prescribed position by support unit 40.

### <Configuration of controlling hydroelectric power generation apparatus>

Fig. 3 is a block diagram showing a configuration of controlling hydroelectric power generation apparatus 100 according to the embodiment. As shown in Fig. 3, hydroelectric power generation apparatus 100 further comprises control device 4 and a rotational speed sensor 6 in addition to hydraulic turbine 1, speed increasing gear 2 and power generator 3.

Rotational speed sensor 6 senses the rotational speed of hydraulic turbine 1 (including information of whether hydraulic turbine 1 rotates forward or in reverse). Rotational speed sensor 6 transmits to control device 4 a signal indicating the sensed rotational speed of hydraulic turbine 1.

Control device 4 controls power that power generator 3 generates, based on a result of sensing by various sensors such as rotational speed sensor 6, and control device 4 controls power generator 3 to operate as an electric motor.

Control device 4 measures, for example via a voltage sensor (not shown) or the like, a voltage of power generated by power generator 3. Control device 4 determines an optimum value of a current allowing a maximum power to be extracted from power generator 3. Control device 4 controls hydroelectric power generation apparatus 100 so that the value of the current of power generator 3 matches the optimum value. For example, control device 4 may control the rotational speed of hydraulic turbine 1 so that the value of the current of power generator 3 matches the optimum value.

In the present embodiment, control device 4 includes an inverter 4a, a power conversion device 4b, and a controller 4c including a CPU (Central Processing Unit) (not shown) or the like.

Inverter 4a is connected to power generator 3 and converts three-phase AC power generated by power generator 3 into DC power. Further, inverter 4a receives DC power from a power supply source such as a battery (not shown), converts the DC power into AC power, and supplies the AC power to power generator 3. Inverter 4a operates in response to a drive command issued from controller 4c.

Power conversion device 4b is connected to inverter 4a and converts the DC power converted by inverter 4a into prescribed power (AC power of a prescribed voltage or DC power of a prescribed voltage), and outputs the converted power to outside hydroelectric power generation apparatus 100. Power conversion device 4b operates in response to a drive command issued from controller 4c. When power generator 3 is operated as an electric motor, power conversion device 4b may supply inverter 4a with DC power instead of a power supply source such as a battery.

For hydroelectric power generation apparatus 100 having the above-described configuration, garbage, aquatic plants and the like drifting and thus arriving at the hydraulic turbine get entangled in the hydraulic turbine and cause a reduction in an amount of power that the apparatus generates. For this reason, it is conceivable to install a simple debris remover such as a comb-shaped filter, for example, in such a small-sized hydroelectric power generation apparatus as described above. However, with a simple debris remover, the garbage, aquatic plants and the like cannot completely be removed, and some debris and aquatic plants may flow into the hydraulic turbine. Some debris having arrived at the hydraulic turbine passes through the hydraulic turbine, while other debris is caught by the hydraulic turbine's blades (or vanes). When the debris caught by the hydraulic turbine's blades is pressed against the blades as they traverse running water, the debris does not easily come off the blades when there is little change in flow velocity, in particular. In particular, string-like debris entangled in the hydraulic turbine may not be easily removed from the hydraulic turbine. Accordingly, a periodical operation to remove debris adhering to the hydraulic turbine is required.

Accordingly, in the present embodiment, control device 4 performs reverse rotation control to apply to hydraulic turbine 1 receiving a water current and thereby being rotated in a first direction a torque in a second direction opposite to the first direction (hereinafter referred to as a "reverse torque") to cause hydraulic turbine 1 to rotate in the second direction, and forward rotation control to return a direction of rotation of hydraulic turbine 1 to the first direction.

In this way, even if string-like debris is entangled in hydraulic turbine 1, the reverse rotation control and the forward rotation control can be performed to cause string-like debris to float off the hydraulic turbine and can thus remove the string-like debris entangled in hydraulic turbine 1.

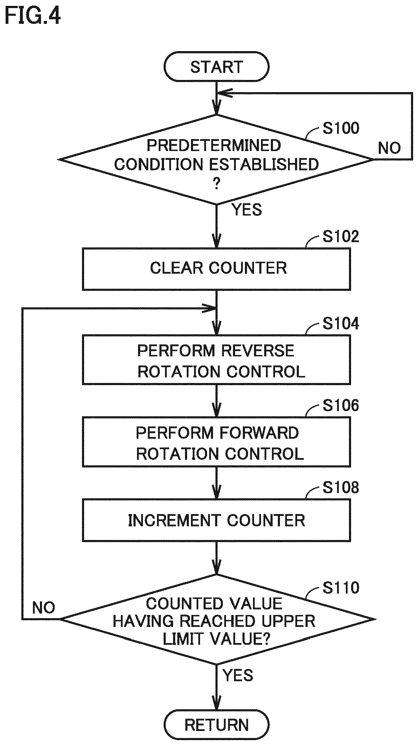

Hereinafter, with reference to Fig. 4, Fig. 5 and Fig. 6, a process performed by control device 4 to control hydroelectric power generation apparatus 100 according to the present embodiment will be described.

Fig. 4 is a flowchart of a process performed by control device 4 to control hydroelectric power generation apparatus 100 to remove debris.

In step (hereinafter "S") 100, controller 4c determines whether a predetermined condition is established. The predetermined condition is a condition for starting performing the control process for removing debris, and it is for example at least one of: a condition that power generator 3 generates an amount of power reduced to be smaller than a threshold value; a condition that hydraulic turbine 1 rotates at a speed reduced to be smaller than a threshold value; a condition that power generator 3 generates power having a voltage reduced to be smaller than a threshold value; and a condition that a predetermined period of time has elapsed since a time point at which the control process for removing debris was last performed. The predetermined period of time may be, for example, one hour, or may be set to allow the process to be performed at a prescribed frequency based on an amount of grass flowing through the water channel, power generator 3's lifetime and a mechanical body's lifetime, and the like. Note that the various threshold values may each be set, for example, based on an average value in the immediately previous, prescribed power generation period. When it is determined that the predetermined condition is established (YES in S100), the process proceeds to S102.

In S102, controller 4c clears a counter having a count value incremented whenever reverse rotation control and forward rotation control, which will be described hereinafter, are performed. Specifically, controller 4c resets the count value to an initial value (for example, zero).

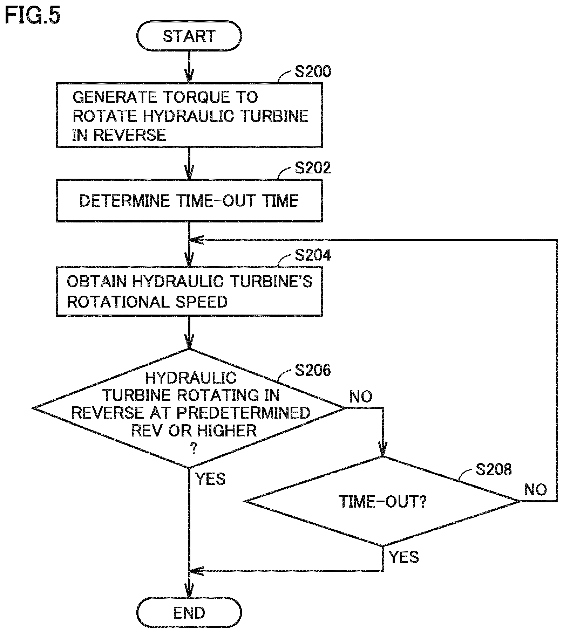

In S104, controller 4c performs the reverse rotation control. The reverse rotation control will more specifically be described with reference to Fig. 5. In S106, controller 4c performs the forward rotation control. The forward rotation control will more specifically be described with reference to Fig. 5. In S108, controller 4c increments the counter. Specifically, controller 4c increments the count value of the counter by a prescribed value (for example of 1).

In S110, controller 4c determines whether the count value has reached an upper limit value. The upper limit value is an upper limit value of how many times the reverse rotation control and the forward rotation control, which will be described hereinafter, are both performed, and, for example, a predetermined value is set. When it is determined that the count value has reached the upper limit value (YES in S110), this process ends.

If it is determined that the predetermined condition is not established (NO in S100), the process returns to S100. If it is determined that the count value has not reached the upper limit value (NO in S110), the process proceeds to S104.

Fig. 5 is a flowchart of a process performed by control device 4 to control hydroelectric power generation apparatus 100 according to the embodiment for reverse rotation.

At S200, controller 4c controls inverter 4a to cause a reverse torque to act on hydraulic turbine 1. For example, controller 4c controls inverter 4a to generate a reverse torque of a predetermined magnitude. The reverse torque of the predetermined magnitude is set so that when the reverse torque is generated and accordingly hydraulic turbine 1 has a rotational speed converged, hydraulic turbine 1 rotates in reverse at a predetermined speed or higher. Note that controller 4c may control inverter 4a to generate a reverse torque so that hydraulic turbine 1 rotates at a speed reduced by an amount to attain a prescribed value.

In S202, controller 4c determines a time-out time. Controller 4c may determine a predetermined value as the time-out time or may determine as the time-out time a value set based on the rotational speed of hydraulic turbine 1 or the like.

In S204, controller 4c obtains the current rotational speed of hydraulic turbine 1. Controller 4c obtains the current rotational speed of hydraulic turbine 1 via rotational speed sensor 6.

In S206, controller 4c determines, based on a result of sensing by rotational speed sensor 6, whether hydraulic turbine 1 is rotating in reverse at a rotational speed equal to or higher than a predetermined rotational speed. For example, when it is determined that hydraulic turbine 1 is rotating in reverse at the predetermined rotational speed or higher (YES in S206), controller 4c ends the process.

If it is determined that hydraulic turbine 1 is not rotating in reverse at the predetermined rotational speed or higher (NO in S206), the process proceeds to S208. In S208, controller 4c determines whether a time-out is reached. Specifically, controller 4c determines whether the reverse rotation control is performed for a period of time exceeding the time-out time. If it is determined that the time-out is reached (YES in S208), the process ends. If it is determined that the time-out is not reached (NO in S208), the process proceeds to S204.

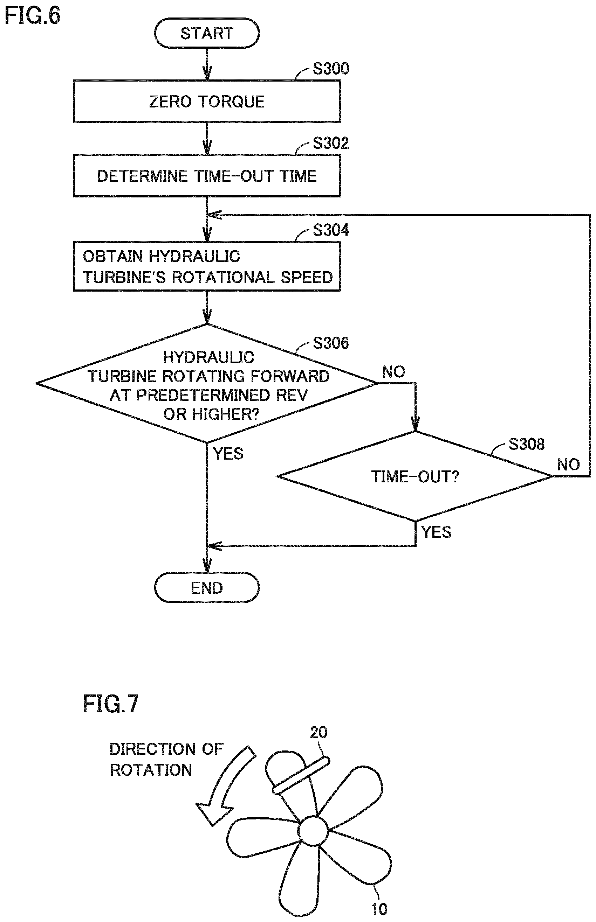

Fig. 6 is a flowchart of a process performed by control device 4 to control hydroelectric power generation apparatus 100 according to the embodiment for forward rotation.

In S300, controller 4c controls inverter 4a to zero the torque acting on hydraulic turbine 1 from power generator 3. For example, controller 4c controls inverter 4a to stop power supplied from inverter 4a to power generator 3.

In step S302, controller 4c determines a time-out time. The time-out time may be the same as the time-out time determined for the reverse rotation control described above, or a time different from the time-out time determined for the reverse rotation control.

In S304, controller 4c obtains the current rotational speed of hydraulic turbine 1. In S306, controller 4c determines, based on a result of sensing by rotational speed sensor 6, whether hydraulic turbine 1 is rotating forward at a rotational speed equal to or higher than a predetermined rotational speed. The predetermined rotational speed is, for example, a rotational speed which helps removing debris floating off hydraulic turbine 1 as it is rotated in reverse. When it is determined that hydraulic turbine 1 is rotating forward at the predetermined rotational speed or higher (YES in S306), the process ends.

If it is determined that hydraulic turbine 1 is not rotating forward at the predetermined rotational speed or higher (NO in S306), the process proceeds to S308. In S308, controller 4c determines whether a time-out is reached. Specifically, controller 4c determines whether the forward rotation control is performed for a period of time exceeding the time-out time. If it is determined that the time-out is reached (YES in S308), the process ends. If it is determined that the time-out is not reached (NO in S308), the process proceeds to S304.

An operation of control device 4 of hydroelectric power generation apparatus 100 according to the present embodiment based on the above configuration and flowchart will be described with reference to Figs. 7, 8, 9, and 10.

For example, it is assumed that hydraulic turbine 1 rotates while receiving a water current and also operates to generate power. At the same time, it is assumed that string-like debris adheres to hydraulic turbine 1.

Fig. 7 is a figure for illustrating a state of string-like debris 20 adhering to hydraulic turbine 1. As shown in Fig. 7, string-like debris 20 adheres to one of the plurality of blades included in hydraulic turbine 1. It is assumed that water flows from the front side of the plane of the sheet of Fig. 7 to the back side thereof. Accordingly, hydraulic turbine 1 rotates in a direction indicated in Fig. 7 by an arrow, with string-like debris adhering thereto as it receives a water current.

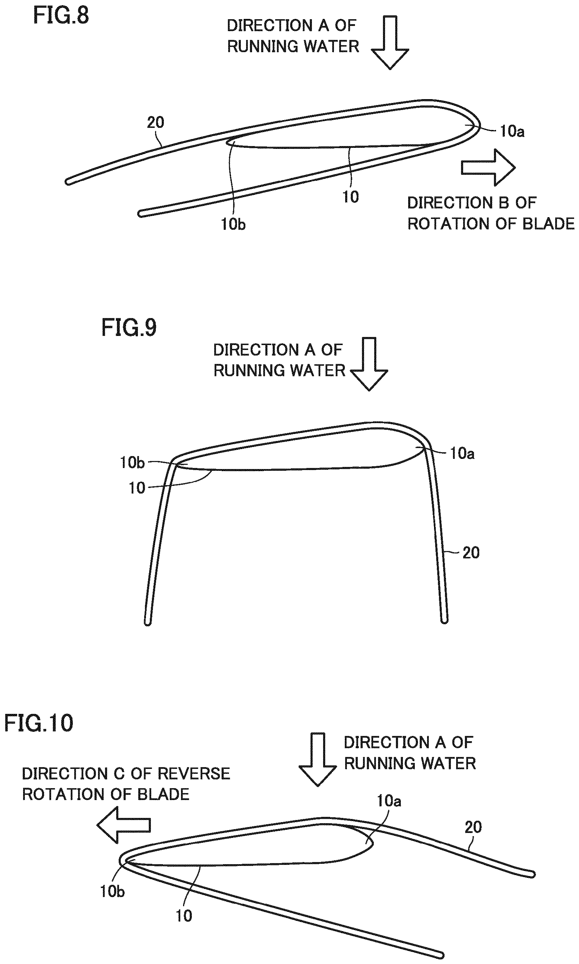

Fig. 8 is a cross section of a blade 10 of hydraulic turbine 1 with debris 20 adhering thereto when the hydraulic turbine rotates forward. In Fig. 8, water flows along an arrow indicating a direction A of running water (in a downward direction in the drawing). Blade 10 of hydraulic turbine 1 moves toward an arrow indicating a direction B which is perpendicular to direction A of running water and in which the blade rotates (or a rightward direction in the drawing).

Blade 10 of hydraulic turbine 1 traverses a water current. Accordingly, pressure is generated on a surface of a front edge portion 10a of blade 10 of hydraulic turbine 1. The generated pressure presses string-like debris 20 against front edge portion 10a of blade 10 of hydraulic turbine 1. If blade 10 of hydraulic turbine 1 has rotational speed which is sufficiently large relative to the water current's flow velocity, string-like debris 20 trails in a direction opposite to direction B in which the blade rotates. Thus when string-like debris 20 adhering to hydraulic turbine 1 is increased, it may reduce the rotational speed of hydraulic turbine 1, the amount of power generated by power generator 3, the voltage of the generated power, and the like.

For example, when the amount of power generated is smaller than the threshold value, it is determined that the predetermined condition is established (YES in S100), the counter is cleared (S102), and the reverse rotation control is performed (S104). When the reverse rotation control is started, inverter 4a is controlled to cause a reverse torque to act on hydraulic turbine 1 from power generator 3 (S200), and a time-out time is determined (S202). The reverse torque acting on hydraulic turbine 1 acts to reduce the rotational speed of hydraulic turbine 1.

When hydraulic turbine 1 is substantially stopped from rotating, blade 10 of hydraulic turbine 1 is stopped from moving, and accordingly, as shown in Fig. 9, string-like debris 20 adhering to blade 10 will be trailed by force of a water current in the same direction as direction A of running water. If the reverse torque is larger than a rotation torque rotating hydraulic turbine 1 as it receives a water current, hydraulic turbine 1 thereafter starts reverse rotation.

Fig. 10 is a cross section of blade 10 of hydraulic turbine 1 with debris 20 adhering thereto when the hydraulic turbine rotates in reverse. In Fig. 10, water flows along an arrow indicating direction A of running water (in a downward direction in the drawing). Blade 10 of hydraulic turbine 1 moves toward an arrow indicating a direction C which is perpendicular to direction A of running water and in which the blade rotates in reverse (or a leftward direction in the drawing).

Blade 10 of hydraulic turbine 1 traverses a water current. Accordingly, pressure is generated on a surface of a rear edge portion 10b of blade 10 of hydraulic turbine 1. The generated pressure presses string-like debris 20 against rear edge portion 10b of blade 10 of hydraulic turbine 1. If blade 10 of hydraulic turbine 1 has rotational speed which is sufficiently large relative to the water current's flow velocity, string-like debris 20 trails in a direction opposite to direction C in which the blade rotates in reverse.

The current rotational speed of hydraulic turbine 1 is obtained (S204), and the control determines whether hydraulic turbine 1 is rotating in reverse at a predetermined rev or higher (S206). When it is determined that hydraulic turbine 1 is rotating in reverse at the predetermined rev or higher (YES in S206), the reverse rotation control ends.

After the reverse rotation control ends, the forward rotation control is performed (S106). When the forward rotation control is performed, inverter 4a is controlled to zero a torque acting on hydraulic turbine 1 from power generator 3 (S300), and a time-out time is determined (S302). Subsequently, the current rotational speed of hydraulic turbine 1 is obtained (S304), and the control determines whether hydraulic turbine 1 is rotating forward at a predetermined rev or higher (S306). When it is determined that hydraulic turbine 1 is rotating forward at the predetermined rev or higher (YES in S306), the forward rotation control ends and the counter is incremented.

The reverse rotation control and the forward rotation control are performed alternately a plurality of times until the counter's count value reaches the upper limit value (NO in S110). Once the counter's count value has reached the upper limit value (YES in S110), the control process for removing debris ends.

With the reverse rotation control and the forward rotation control performed alternately, when hydraulic turbine 1 is rotating forward, string-like debris 20 floats off the hydraulic turbine 1 blade 10 at rear edge portion 10b, as shown in Fig. 8. When hydraulic turbine 1 is changed from this state to rotate in reverse, pressure decreases at front edge portion 10a of blade 10 of hydraulic turbine 1 and increases at rear edge portion 10b of blade 10 of hydraulic turbine 1. At the time, when a water current is formed along a surface of blade 10, debris 20 floats off blade 10 and is flowed downstream before debris 20 is pressed against blade 10 by pressure.

Thus, according to hydroelectric power generation apparatus 100 of the present embodiment, even if string-like debris is entangled in hydraulic turbine 1, the reverse rotation control and the forward rotation control can be performed to cause string-like debris to float off hydraulic turbine 1 and can thus remove the string-like debris entangled in hydraulic turbine 1. Thus a hydroelectric power generation apparatus and power generation system can be provided which remove string-like debris entangled in a hydraulic turbine thereof.

Further, when repeating control to rotate hydraulic turbine 1 forward and control to stop hydraulic turbine 1 from rotating is compared with performing the reverse rotation control, the latter can more effectively float off debris 20 at front edge portion 10a of blade 10 than stopping hydraulic turbine 1 from rotating. Thus performing the forward rotation control and the reverse rotation control alternately a plurality of times can more effectively remove debris.

Hereinafter, a modified example will be described.

While in the above-described embodiment the reverse rotation control and the forward rotation control are described as being repeatedly performed until the counter's count value reaches an upper limit value, times for which power generator 3 is driven in the reverse and forward rotation controls may be different from or the same as times for which power generator 3 is driven when the reverse and forward rotation controls are immediately previously performed, respectively. Alternatively, torques to drive power generator 3 in the reverse and forward rotation controls may be different from or the same as torques to drive power generator 3 when the reverse and forward rotation controls are immediately previously performed, respectively. This allows the reverse rotation control and the forward rotation control to be performed alternately in a manner different each time when they are performed. This can change pressure at front edge portion 10a and rear edge portion 10b of blade 10 to which debris 20 adheres, and thus help floating debris 20 off the blade.

While the above embodiment has been described with an inverter used to drive power generator 3 to cause a reverse torque to act on hydraulic turbine 1, driving power generator 3 is not a requirement. For example, a pitch of the blades of the hydraulic turbine may be changed to reverse a direction of rotation of hydraulic turbine 1 when it receives a water current, or separately from power generator 3 an electric motor may be provided to cause a reverse torque to act on hydraulic turbine 1.

While the above embodiment has been described by referring as an example to a power generation apparatus that generates power by receiving running water by a hydraulic turbine having a horizontal-axis-type, propeller-type rotary blade shown in Figs. 1 and 2, the present invention is not limited to a hydraulic turbine having such a configuration. For example, the present invention is also applicable to a power generation apparatus which generates power by receiving running water by a hydraulic turbine having a vertical-axis-type rotary blade.

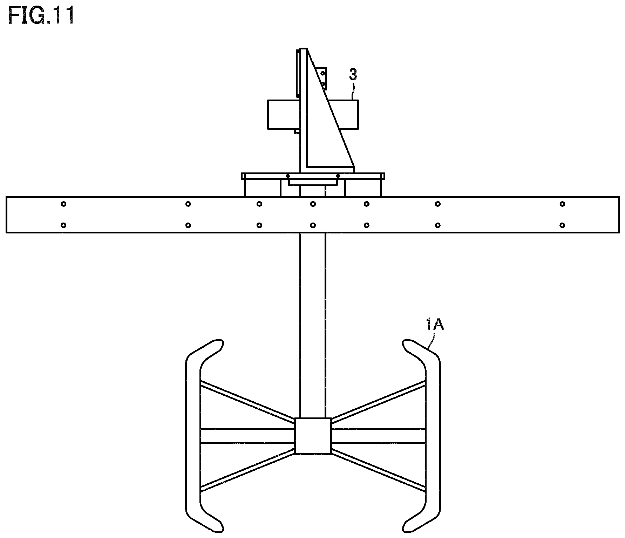

Fig. 11 is a front view of a schematic shape of a hydroelectric power generation apparatus according to a modified example. The hydroelectric power generation apparatus according to the modified example comprises a hydraulic turbine 1A and power generator 3. Hydraulic turbine 1A has vertical-axis-type rotary blades and is rotated by a water current. Power generator 3 is coupled with the rotary shaft of hydraulic turbine 1A. When hydraulic turbine 1A rotates, the rotary shaft of power generator 3 also rotates.

The control device and flowcharts shown in Figs. 4 to 6 are also applicable to the Fig. 11 hydraulic turbine 1A similarly in combination. The control device and flowcharts shown in Figs. 4 to 6 are as has been described above, and accordingly, will not be described repeatedly.

While vertical-axis-type hydraulic turbine 1A is of a linear blade type and shown by way of example in a configuration with each blade having upper and lower ends bent toward the rotary shaft, as shown in Fig. 11, it is not particularly limited as such. For example, it may be a different type such as Darrieus type, giromill type, Savonius type, cross flow type, paddle type, S type rotor type or the like.

When the hydroelectric power generation apparatus according to the modified example has hydraulic turbine 1A with string-like debris entangled therein, the reverse rotation control and the forward rotation control can be performed to remove the string-like debris.

It should be noted that the above modified example may be implemented entirely or have a portion implemented in combination.

Preferably, as shown in Figs. 1 and 2, hydraulic turbine 1 has a horizontal-axis-type, propeller-type rotary blade.

Preferably, as shown in Fig. 11, hydraulic turbine 1A has a vertical-axis-type rotary blade.

Preferably, a reduction in an amount of power generated that is attributed to debris can be prevented by using any one of the above-described hydroelectric power generation apparatuses in a power generation system performing ocean current power generation, tidal power generation or wave power generation converting kinetic energy of running water into electric power.

### [Second Embodiment]

In the first embodiment, the reverse rotation control and the forward rotation control are performed to remove garbage (debris) adhering to hydraulic turbine 1. In contrast, in the second embodiment, the reverse rotation control and the forward rotation control are performed by a number of times corresponding to an amount by which an amount of power that the apparatus generates is reduced. A configuration of a hydroelectric power generation apparatus and a power generation system according to the second embodiment is similar to the configuration of the hydroelectric power generation apparatus of the first embodiment shown in Figs. 1 to 3, the configuration of the hydroelectric power generation apparatus shown in Fig. 11 described as a modified example, and the configuration of the power generation system described in the first embodiment. Accordingly, the configuration of the hydroelectric power generation apparatus of the present embodiment will not be described repeatedly.

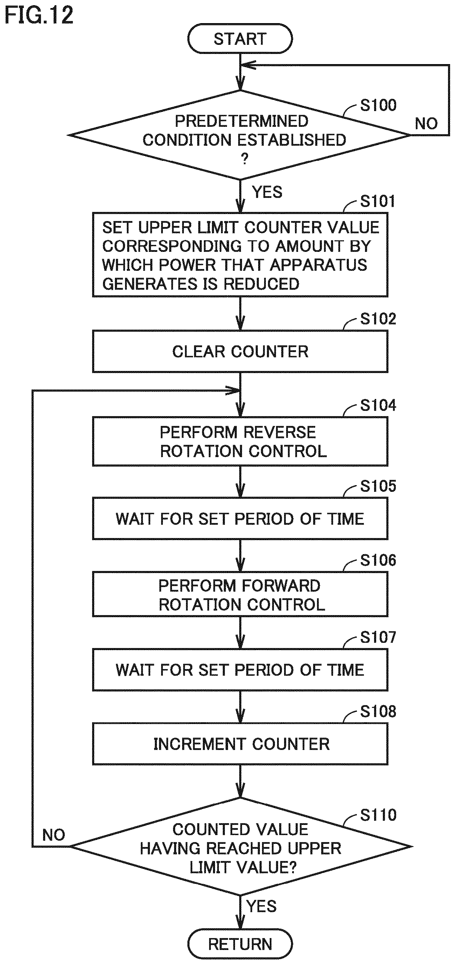

Fig. 12 is a flowchart for illustrating control performed by controller 4c to control the hydroelectric power generation apparatus according to the second embodiment.

With reference to Fig. 12, initially in S100, controller 4c determines whether a predetermined condition is established. The predetermined condition is as has been described in the first embodiment, and accordingly, will not be described repeatedly.

In S100, when it is determined that the predetermined condition is established (YES in S100), controller 4c performs steps S101 to S110 as debris removal control. Note that the Fig. 12 steps S102, S104, S106, S108, and S110 are identical to the Fig. 4 steps S102, S104, S106, S108, and S110, respectively. Accordingly, the steps will not be described repeatedly.

While in the debris removal control according to the second embodiment, as well as in the first embodiment, controller 4c performs the reverse rotation control and the forward rotation control, in order to recover power that the apparatus generates and also maximize a lifetime of power generator 3 also used as a motor and that of a mechanical body such as a gear, how many times the reverse rotation control and the forward rotation control are performed (or the debris removal control is performed) is changed depending on how debris adheres. Note that the debris removal control is performed a number of times, which corresponds to the upper limit value of the counter of the first embodiment. An amount of adhering debris has a correlation with an amount by which the power that the apparatus generates is reduced, and accordingly in S101 controller 4c sets an upper limit counter value corresponding to the amount by which the power that the apparatus generates is reduced. For example, controller 4c obtains generated power using the voltage and the current obtained from a voltage sensor or a current sensor (not shown) provided at inverter 4a. Controller 4c subtracts the obtained generated power from a predetermined maximum power that the apparatus generates to obtain an amount by which the power that the apparatus generates is reduced.

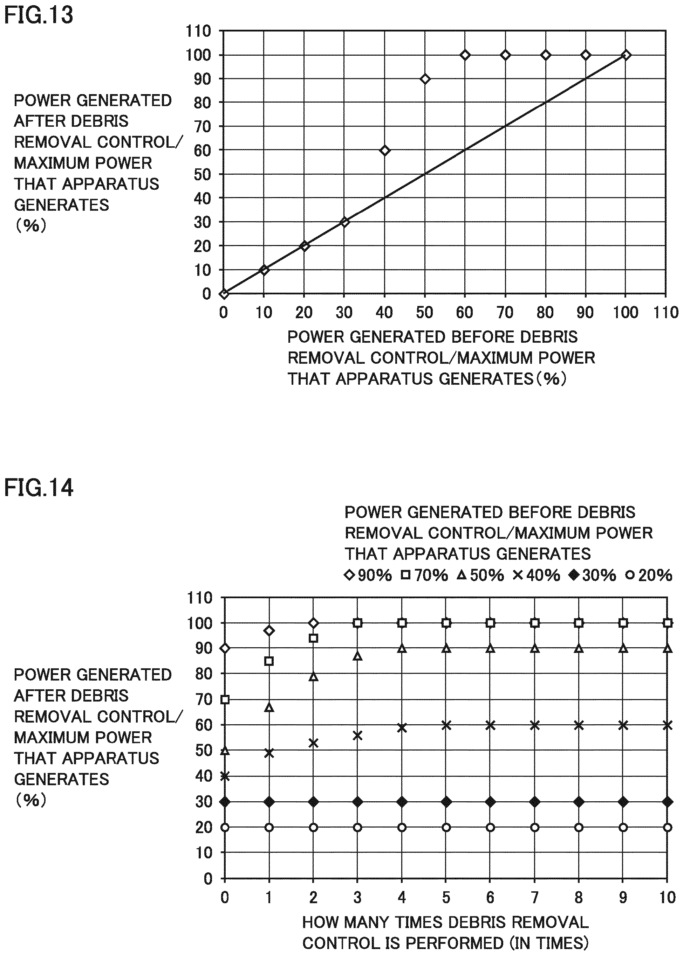

Hereinafter will be described how an amount by which the power that the apparatus generates is reduced is correlated with how many times the debris removal control is performed. Fig. 13 is a diagram showing a relationship between power generated before the debris removal control and power generated after the debris removal control.

As shown in Fig. 13, while the power generated before the debris removal control is 0 to 30% of the maximum power that the apparatus generates, the debris removal control cannot sufficiently recover power that the apparatus generates. In contrast, when the power generated before the debris removal control is 40% of the maximum power that the apparatus generates, and the debris removal control is performed, it recovers power that the apparatus generates to 60% of the maximum power that the apparatus generates.

Furthermore, when the power generated before the debris removal control is 50% of the maximum power that the apparatus generates, and the debris removal control is performed, it recovers power that the apparatus generates to about 90% of the maximum power that the apparatus generates. Furthermore, when the power generated before the debris removal control is equal to or greater than 60% of the maximum power that the apparatus generates, and the debris removal control is performed, it recovers power that the apparatus generates to substantially 100% of the maximum power that the apparatus generates.

In the debris removal control, the larger the amount of debris entangled in hydraulic turbine 1 is, the more difficult it is to remove the debris. This is probably because the debris is entangled in hydraulic turbine 1 complicatedly, and as the amount of debris increases, hydraulic turbine 1 rotates at lower speed, so that the debris's inertial force when the direction of rotation of the hydraulic turbine is changed is insufficiently obtained, and the debris thus does not float off the hydraulic turbine.

From the above result, it can be seen that it is effective to perform the debris removal control before the power that the apparatus generates is reduced to 50% of the maximum power that the apparatus generates. Therefore, it is desirable that the above-mentioned predetermined condition should have the threshold value determined so that the condition is established before the power that the apparatus generates is reduced to 50%, preferably 60%, of the maximum power that the apparatus generates.

Fig. 14 is a graph for examining how many times the debris removal control is performed. In Fig. 14, the vertical axis represents a ratio (in %) of power generated after the debris removal control relative to the maximum power that the apparatus generates, and the horizontal axis represents how many times the debris removal control is performed, and as ratios (in %) of power generated before the debris removal control relative to the maximum power that the apparatus generates, six types of data of 20%, 30%, 40%, 50%, 70%, 90% are plotted.

In Fig. 14, in a case with the power generated before the debris removal control being 20% of the maximum power that the apparatus generates and a case with it being 30% thereof, the power that is generated after the debris removal control does not increase no matter how many times the debris removal control is performed, and it can be seen that debris is not removed. When the power generated before the debris removal control is 40% of the maximum power that the apparatus generates, and the debris removal control is performed, the power that is generated after the debris removal control is somewhat recovered, however, it does not increase to be equal to or greater than 60% of the maximum power that the apparatus generates.

When the power generated before the debris removal control is 50% of the maximum power that the apparatus generates, and the debris removal control is performed, the power that is generated after the debris removal control is increased and thus recovered in sofaras the debris removal control is performed up to 4 times, and performing the debris removal control for the fifth time or more does not increase the power that the apparatus generates to be equal to or greater than 90% of the maximum power that the apparatus generates.

When the power generated before the debris removal control is 70% of the maximum power that the apparatus generates, and the debris removal control is performed, the power that is generated after the debris removal control is increased and thus recovered in sofaras the debris removal control is performed up to 3 times, and when the debris removal control is performed for the third time, the power that the apparatus generates is substantially 100% of the maximum power that the apparatus generates. When the power generated before the debris removal control is 90% of the maximum power that the apparatus generates, and the debris removal control is performed, the power that is generated after the debris removal control is increased and thus recovered in sofaras the debris removal control is performed up to twice, and when the debris removal control is performed for the second time, the power that the apparatus generates is substantially 100% of the maximum power that the apparatus generates.

When the debris removal control is performed frequently, power generator 3 and the mechanical body will bear a large load and accordingly, power generator 3 has a reduced lifetime, and accordingly, for a hydroelectric power generation apparatus or similar facility continuously used for a long term, it is desirable to perform the debris removal control at an appropriate frequency for a balance between recovery of power that the apparatus generates and maintenance of the lifetime of power generator 3 and that of the mechanical body. Accordingly in the second embodiment, how many times the debris removal control is performed is changed in response to an amount by which the power that the apparatus generates is reduced.

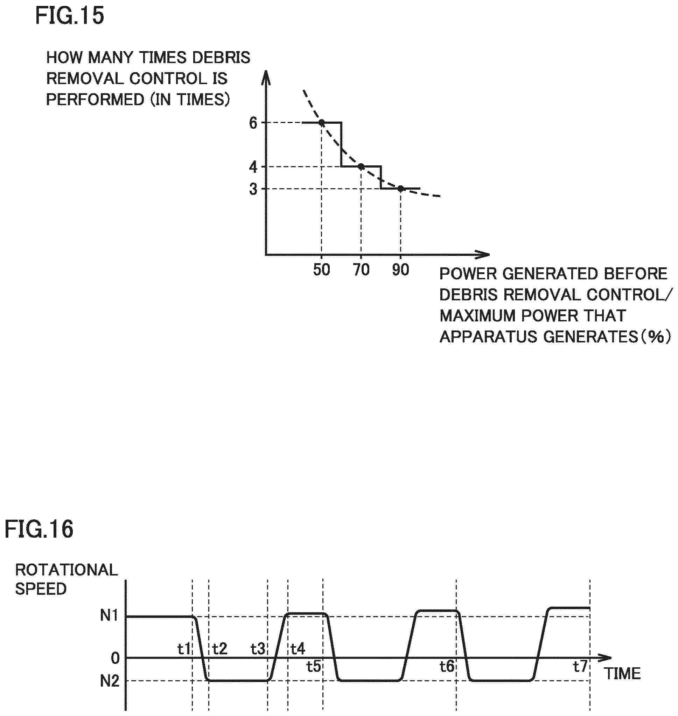

Fig. 15 is a diagram showing a relationship between power generated before the debris removal control and how many times the debris removal control is performed. As has been described with reference to Fig. 13, in order to effectively recover power, the debris removal control is performed when the power generated before the debris removal control is equal to or greater than 50% of the maximum power that the apparatus generates. In that case, with the Fig. 14 relationship considered, in performing the debris removal control: when the power generated before the debris removal control is 90% of the maximum power that the apparatus generates, the debris removal control is performed 3 times; when the power generated before the debris removal control is 70% of the maximum power that the apparatus generates, the debris removal control is performed 4 times; and when the power generated before the debris removal control is 50% of the maximum power that the apparatus generates, the debris removal control is performed 6 times. Thus, the more the power generated before the debris removal control is reduced, the more frequently the debris removal control is performed.

Returning to Fig. 12, in S101, controller 4c sets the counter's upper limit value to a numerical value corresponding to an amount by which the power that the apparatus generates is reduced, based on how many times the debris removal control is performed as shown in the relationship shown in Fig. 15. Subsequently, in S102, controller 4c clears an incorporated counter. In S104, controller 4c performs the reverse rotation control. Subsequently, in S105, while the reverse rotation control is performed, controller 4c waits until a set period of time (for example of 1 to 10 seconds) elapses.

Subsequently, in S106, controller 4c performs the forward rotation control. Subsequently, in S107, while the forward rotation control is performed, controller 4c waits until a set period of time (for example of 1 to 10 seconds) elapses.

Subsequently, in S108 controller 4c increments the counter, and in S110 controller 4c determines whether the counter has counted a value which reaches the upper limit value (how many times, as set, the debris removal control is performed). If the counted value has not reached the upper limit value in S108, controller 4c returns the process to step S110 and again performs the reverse rotation control.

On the other hand, if the counted value reaches the upper limit value in S110, controller 4c ends the process.

As the process proceeds according to the flow chart described above, controller 4c performs the debris removal control a plurality of times in response to an amount by which the power that the apparatus generates is reduced (that is, the reverse rotation control and the forward rotation control are performed alternately a plurality of times).

Fig. 16 is a waveform diagram representing how rotational speed changes when the debris removal control is performed a plurality of times. In Fig. 16 the vertical axis represents the rotational speed of hydraulic turbine 1. In Fig. 16 the horizontal axis represents time. For example, let us assume that the power that the apparatus generates is 90% of the maximum power that the apparatus generates. As shown in Fig. 16, when the predetermined condition is established (YES in S100), a value of 3 is set as the counter's upper limit value corresponding to an amount by which the power that the apparatus generates is reduced (S101). When the counter is cleared (S102), the reverse rotation control is performed from times t1 to t2 (S104). Then, the control waits from times t2 to t3 (S105), and thereafter performs the forward rotation control from times t3 to t4 (S106). This can change the rotational speed of hydraulic turbine 1, and foreign matters adhering to hydraulic turbine 1 can be floated when the hydraulic turbine is rotated in reverse, and when the hydraulic turbine is rotated forward a force is applied and by a water current's force the foreign matters can be made to flow downstream and thus removed. This has an effect of recovering an amount by which the power that the apparatus generates is reduced due to foreign matters.

Then, the control waits from times t4 to t5 (S107), and thereafter the counter is incremented (S108). Such debris removal control is also performed between times t5 and t6 and between times t6 and t7 for a total of three times. Whenever the debris removal control is performed once, an amount of debris adhering to hydraulic turbine 1 is removed, which reduces rotational resistance of hydraulic turbine 1 by an amount. This results in hydraulic turbine 1 having a rotational speed increased from N1, which is a value before the debris removal control, by an amount whenever the debris removal control is performed once.

While in the second embodiment the set period of time in step S105 and the set period of time in step S107 have fixed values while they are repeated until the counter reaches the upper limit value, the set periods of time may alternatively be changed.

Thus, in hydroelectric power generation apparatus 100 of the second embodiment, when an amount by which the power that the apparatus generates is reduced has a first value (for example, when it is 90% of the maximum power that the apparatus generates), the reverse rotation control and the forward rotation control are alternately performed a first number of times (for example, three times). When an amount by which the power that the apparatus generates is reduced has a second value larger than the first value (for example, when it is 70% of the maximum power that the apparatus generates), the reverse rotation control and the forward rotation control are alternately performed a second number of times larger than the first number of times (for example, four times).

String-like debris can thus be floated off hydraulic turbine 1 and thus removed therefrom. Thus a hydroelectric power generation apparatus and power generation system can be provided which remove string-like debris entangled in a hydraulic turbine thereof.

### [Third Embodiment]

In the second embodiment, how many times the debris removal control is performed is determined to correspond to an amount by which the power that the apparatus generates is reduced, and in that way, debris is removed effectively, and a load of power generator 3 is also reduced to allow power generator 3 and a mechanical body to have longer lifetime. In the third embodiment, a control pattern applied to reverse rotation or forward rotation is changed. A configuration of a hydroelectric power generation apparatus and a power generation system according to the second embodiment is similar to the configuration of the hydroelectric power generation apparatus of the first embodiment shown in Figs. 1 to 3, the configuration of the hydroelectric power generation apparatus shown in Fig. 11 described as a modified example, and the configuration of the power generation system described in the first embodiment. Accordingly, the configuration of the hydroelectric power generation apparatus of the present embodiment will not be described repeatedly.

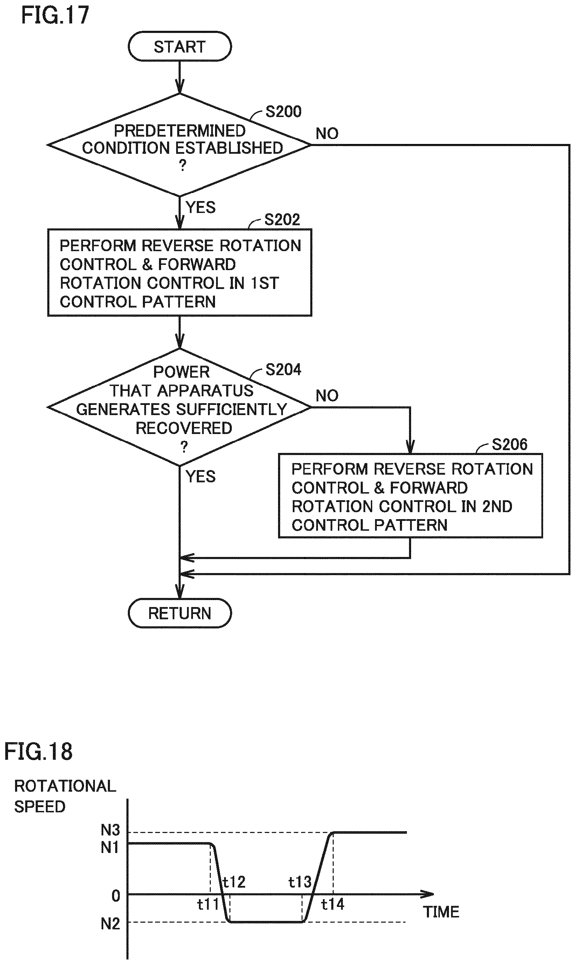

Fig. 17 is a flowchart for illustrating control performed by controller 4c to control the hydroelectric power generation apparatus according to the third embodiment.

With reference to Fig. 17, initially in S200, controller 4c determines whether a predetermined condition is established. The predetermined condition is as has been described in the first embodiment, and accordingly, will not be described repeatedly.

In S200, when it is determined that the predetermined condition is established (YES in S200), controller 4c performs debris removal control, as indicated in steps S202, S204 and S206.

In S202, controller 4c performs the reverse rotation control and the forward rotation control in a first control pattern which changes a rotational speed in a prescribed pattern. As the first control pattern, for example, a control pattern imposing a relatively small load on power generator 3 is set. Thereafter, in S204, controller 4c determines whether the power that the apparatus generates has been recovered sufficiently. For example, when controller 4c determines that the power that the apparatus generates has been recovered to a reference value (that is, it exceeds the reference value), controller 4c determines that the power that the apparatus generates has been recovered sufficiently. When controller 4c determines that the power that the apparatus generates is not recovered sufficiently (that is, it is less than the reference value) (NO in S204), the process proceeds to S206. In S206, controller 4c performs the reverse rotation control and the forward rotation control in a second control pattern, and thereafter ends the process. The second control pattern is a control pattern imposing a larger load on power generator 3 than the first control pattern does. In contrast, when it is determined that the predetermined condition is not established (NO in S200) or when it is determined that the power that the apparatus generates has been recovered to the reference value (YES in S204), the control ends the process.

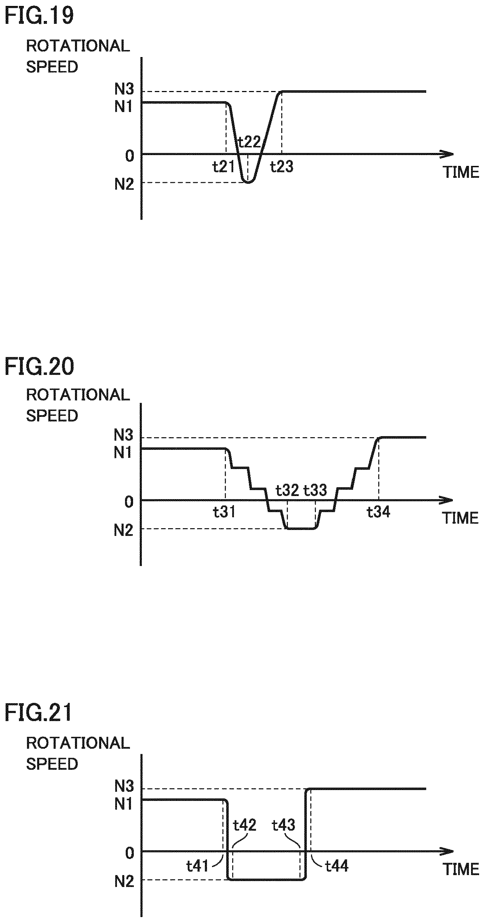

Fig. 18 is a waveform diagram showing a first example of the first control pattern. Fig. 19 is a waveform diagram showing a second example of the first control pattern. Fig. 20 is a waveform diagram showing a third example of the first control pattern. Fig. 21 is a waveform diagram showing an example of the second control pattern. The Figs. 18 to 21 graphs each have a vertical axis representing rotational speed and a horizontal axis representing time.

The waveform of the second control pattern shown in Fig. 21 causes a large torque to power generator 3 in both the reverse rotation control and the forward rotation control to switch the direction of rotation of hydraulic turbine 1 in a short period of time. On the other hand, the waveforms shown in Figs. 18 to 20 cause torque to act in both the reverse rotation control and the forward rotation control more slowly than that of Fig. 21 to switch the direction of rotation of hydraulic turbine 1 accordingly.

As indicated in Fig. 21 by the second control pattern at times t41 to t42 or times t43 to t44, increasing a torque acting on power generator 3, or reversing the rotational speed of hydraulic turbine 1 in a short period of time, can increase a difference in speed between hydraulic turbine 1 and debris and more reliably remove debris. Furthermore, when the debris removal control is performed more frequently, more debris can be removed. However, when power generator 3 is controlled so that hydraulic turbine 1 has its rotational speed constantly, repeatedly changed according to the waveform of Fig. 21, an increased load is imposed on power generator 3 and the mechanical body, which reduces the lifetime of power generator 3 and that of the mechanical body. Accordingly, it is necessary to use power generator 3 which is highly durable and has a large size, which may invite an increased cost for manufacturing power generator 3. Furthermore, while the debris removal control is performed, there is a period of time during which power generation is stopped, and when this is compared with not performing the debris removal control, the former results in the apparatus generating smaller power.

Accordingly, initially, controller 4c performs the debris removal control by applying the first control pattern that imposes a smaller load on power generator 3, and when the power that the apparatus generates is still not recovered, controller 4c performs the debris removal control by applying the second control pattern. Various examples are conceivable for the first control pattern, and accordingly, they will be described with reference to Figs. 18 to 20.

In the example shown in Fig. 18, rotational speed from time t11 to time t12 changes more gently than rotational speed shown in Fig. 21 from time t41 to time t42, and rotational speed from time t13 to time t14 changes more gently than rotational speed shown in Fig. 21 from time t43 to time t44. Accordingly, the load of power generator 3 when controlled by the first control pattern shown in Fig. 18 is smaller than the load of power generator 3 when controlled by the second control pattern shown in Fig. 21. Note that performing the reverse rotation control and the forward rotation control removes the debris on hydraulic turbine 1 by an amount and hence reduces rotational resistance of hydraulic turbine 1 by an amount. As a result, hydraulic turbine 1 has a rotational speed increased by an amount to N3 from N1 assumed before the reverse rotation control and the forward rotation control are performed. Note that it is also similarly observed in Figs. 19 to 21 that hydraulic turbine 1 has a larger rotational speed after the reverse rotation control and the forward rotation control are performed than before they are performed. Accordingly, this will not be described repeatedly in detail.

In the example shown in Fig. 19, rotational speed from time t21 to time t22 changes more gently than rotational speed shown in Fig. 21 from time t41 to time t42, and rotational speed from time t22 to time t23 changes more gently than rotational speed shown in Fig. 21 from time t43 to time t44. Further, after the reverse rotation control, at time S22, the forward rotation control is immediately performed, and when this is compared with the example shown in Fig. 18, the former can stop power generation for a shorter period of time and thus also reduce reduction in an amount of power that is generated.

The example shown in Fig. 20 shows rotational speed reduced stepwise from N1 to N2 during a period from time t31 to time t32. Accordingly, rotational speed from time t31 to time t32 changes more slowly than rotational speed shown in Fig. 21 from time t41 to time t42. Further, the example shown in Fig. 20 shows rotational speed increased stepwise from N2 to N3 during a period from time t33 to time t34. Accordingly, rotational speed from time t33 to time t34 changes more slowly than rotational speed shown in Fig. 21 from time t41 to time t42. Such control is effective when hydraulic turbine 1 has large inertia force and it is difficult to quickly change rotational speed by the reverse rotation control and the forward rotation control and it is also difficult to continuously control power generator 3. Thus performing the reverse rotation control and the forward rotation control with torque caused to act for a reduced a period of time and rotational speed changed stepwise can reduce a load on power generator 3 and the mechanical body in the debris removal control and hence prevent the mechanical body from being damaged.

Thus, in hydroelectric power generation apparatus 100 of the third embodiment, when controller 4c performs the reverse rotation control and the forward rotation control, controller 4c controls power generator 3 to allow hydraulic turbine 1 to have a rotational speed changed in the first control pattern. When the power that the apparatus generates is insufficiently recovered, controller 4c controls power generator 3 to allow hydraulic turbine 1 to have a rotational speed presenting a second control pattern allowing the rotational speed to have a larger rate of change than the first control pattern does.

This can reduce a load on the power generator, and can also reliably float string-like debris off the hydraulic turbine and thus remove it therefrom when the power that the apparatus generates is insufficiently recovered. Thus a hydroelectric power generation apparatus and power generation system can be provided which remove string-like debris entangled in a hydraulic turbine thereof.

While the third embodiment has been described such that both the reverse rotation control and the forward rotation control in the first control pattern are set such that rotational speed is changed more slowly than in the second control pattern, for example one of the reverse rotation control and the forward rotation control in the first control pattern may be set such that rotational speed is changed more slowly than in the second control pattern. This can also reduce a load imposed on power generator 3 and the mechanical body.

It should be understood that the embodiments disclosed herein have been described for the purpose of illustration only and in a non-restrictive manner in any respect. The scope of the present invention is defined by the terms of the claims, rather than the description above, and is intended to include any modifications within the meaning and scope equivalent to the terms of the claims.

### REFERENCE SIGNS LIST

1: hydraulic turbine; 2: speed increasing gear; 3: power generator; 4: control device; 4a: inverter; 4b: power conversion device; 4c: controller; 6: rotational speed sensor, 10: blade, 20: debris, 40: support unit, 40a, 40b: beam, 40c: mount; 40d: support; 40e: base plate; 100: hydroelectric power generation apparatus.

## Claims

1. A hydroelectric power generation apparatus comprising:
a hydraulic turbine configured to rotate in a first direction by receiving a water current;
a power generator coupled with the hydraulic turbine; and
a control device configured to control the power generator,
the control device being configured to perform reverse rotation control and forward rotation control, the reverse rotation control causing a torque in a second direction opposite to the first direction to act on the hydraulic turbine to rotate the hydraulic turbine in the second direction, the forward rotation control reversing a direction of rotation of the hydraulic turbine to the first direction.

2. The hydroelectric power generation apparatus according to claim 1, wherein
the power generator is a rotary electric machine, and
the control device includes a controller and an inverter configured to transmit and receive power to and from the rotary electric machine in response to a control command issued from the controller.

3. The hydroelectric power generation apparatus according to claim 1 or 2, wherein
the control device is configured to perform the reverse rotation control and the forward rotation control alternately a plurality of times, and
times for which the hydraulic turbine is driven in the reverse and forward rotation controls are different from times for which the hydraulic turbine is driven when the reverse and forward rotation controls are immediately previously performed, respectively.

4. The hydroelectric power generation apparatus according to any one of claims 1 to 3, wherein
the control device is configured to perform the reverse rotation control and the forward rotation control alternately a plurality of times, and
torques acting on the hydraulic turbine to drive the hydraulic turbine in the reverse and forward rotation controls are different from torques acting on the hydraulic turbine to drive the hydraulic turbine when the reverse and forward rotation controls are immediately previously performed, respectively.

5. The hydroelectric power generation apparatus according to claim 1 or 2, wherein
the control device is configured to perform the reverse rotation control and the forward rotation control alternately a plurality of times,
manners in which the hydraulic turbine is driven in the reverse and forward rotation controls are identical to manners in which the hydraulic turbine is driven when the reverse and forward rotation controls are immediately previously performed, respectively, and
the manner includes the time for which the hydraulic turbine is driven and the torque acting on the hydraulic turbine to drive the hydraulic turbine.

6. The hydroelectric power generation apparatus according to any one of claims 1 to 5, wherein
the control device is configured to perform the reverse rotation control and the forward rotation control when a predetermined condition is established, and
the predetermined condition includes at least one of: a condition that the power generator generates an amount of power smaller than a threshold value; a condition that the hydraulic turbine has a rotational speed smaller than a threshold value; a condition that a voltage of the generated power by the power generator becomes lower than a threshold value; and a condition that a predetermined period of time has elapsed since a time point at which the reverse rotation control and the forward rotation control were last performed.

7. The hydroelectric power generation apparatus according to claim 1, wherein when power generated by the generator has reduced from power corresponding to a flow velocity by an amount having a first value, the control device performs the reverse rotation control and the forward rotation control alternately a first number of times, whereas when power generated by the generator has reduced from the power corresponding to the flow velocity by an amount having a second value larger than the first value, the control device performs the reverse rotation control and the forward rotation control alternately a second number of times larger than the first number of times.

8. The hydroelectric power generation apparatus according to claim 1, wherein when the control device performs at least one of the reverse rotation control and the forward rotation control, the control device controls the power generator to rotate the hydraulic turbine at a rotational speed in accordance with a first control pattern, and when recovery of power generated by the hydroelectric power generation apparatus is insufficient, the control device controls the power generator to rotate the hydraulic turbine at a rotational speed in accordance with a second control pattern, a changing rate of the rotation speed of the second control pattern being larger than that of the first control pattern.

9. The hydroelectric power generation apparatus according to any one of claims 1 to 8, wherein the hydraulic turbine has a horizontal-axis-type, propeller-type rotary blade.

10. The hydroelectric power generation apparatus according to any one of claims 1 to 8, wherein the hydraulic turbine has a vertical-axis-type rotary blade.

11. A power generation system configured to perform ocean current power generation or tidal power generation by using the hydroelectric power generation apparatus of any one of claims 1 to 10, the ocean current power generation and the tidal power generation converting kinetic energy of running water into electric power.
